# DEMANDE DE BREVET EUROPEEN

(11) **EP 0 676 137 A1**
(43) Date de publication de la demande: **11.10.1995**
(21) Numéro de dépôt: 94400844.0
(22) Date de dépôt: 07.04.1994
(51) Int. Cl.: A01L 7/04, A01L 7/06

(54) **Fixation crampon**

(71) Demandeur: Lefebvre, Didier, F-76690 Bocasse (FR)
(72) Inventeur: Lefebvre, Didier, F-76690 Bocasse (FR)

(57) **Abrégé**

L'invention concerne une fixation en métal trempé permettant de fixer rapidement et simplement un crampon sur une ferrure équine traditionnelle.

Elle est constituée d'une partie inférieure effilée (1) se glissant entre l'éponge du fer et le talon du sabot du cheval par encastrement et d'une partie supérieure taraudée (2) recevant un crampon (6) qui en se serrant assure sa fixité.

La fixation selon l'invention est particuliérement destinée à l'emploi de chevaux de sports sur terrain gras ou glissant pour assurer une adhérence parfaite.

## Description

La présente invention concerne une fixation métallique servant de support à un crampon standard et venant se fixer sur la ferrure d'un cheval.

En utilisation courante le crampon est directement vissé sur l'éponge du fer, et demande par conséquent une intervention supplémentaire lors du ferrage par perçage d'un trou dans le fer et d'un taraudage, l'inconvénient majeure de cette technique réside dans une usure prématurée du trou de taraudage lors de l'utilisation courante du cheval.

En effet la fixation selon l'invention vient se positionner entre le plat de l'éponge du fer et la partie talon du cheval. La fixation selon l'invention est taraudée d'un pas de vis et permet son utilisation et sa tenue par serrage du crampon standard.

Les dessins annexés illustrent l'invention:

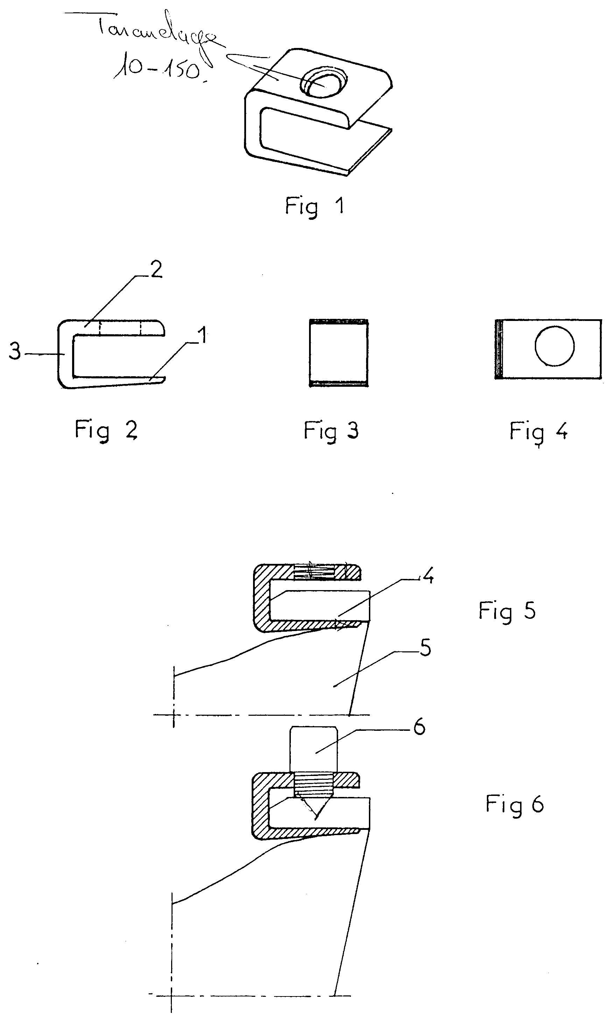

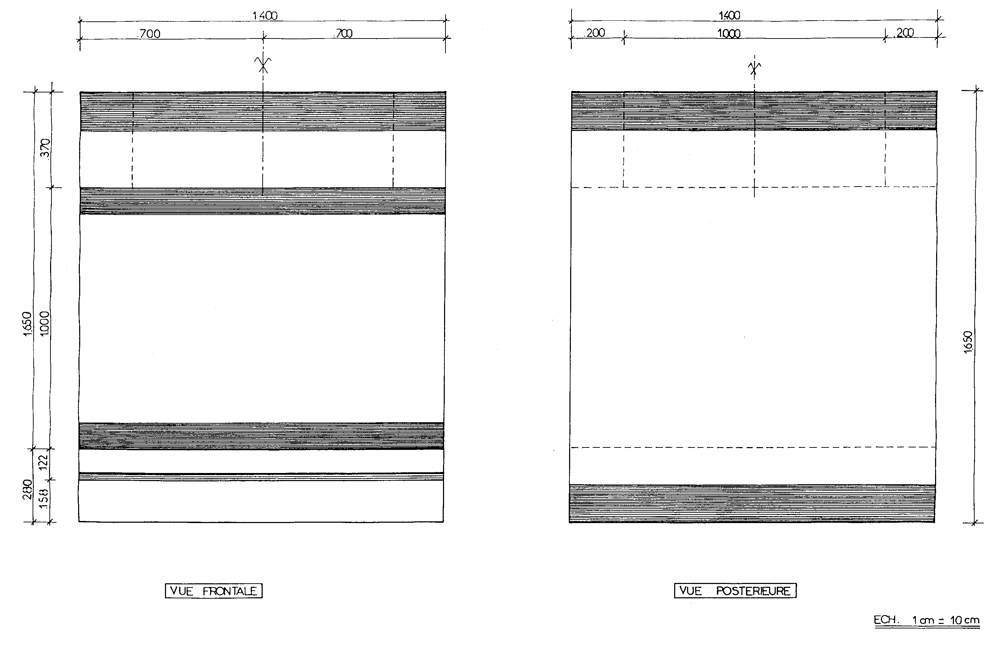

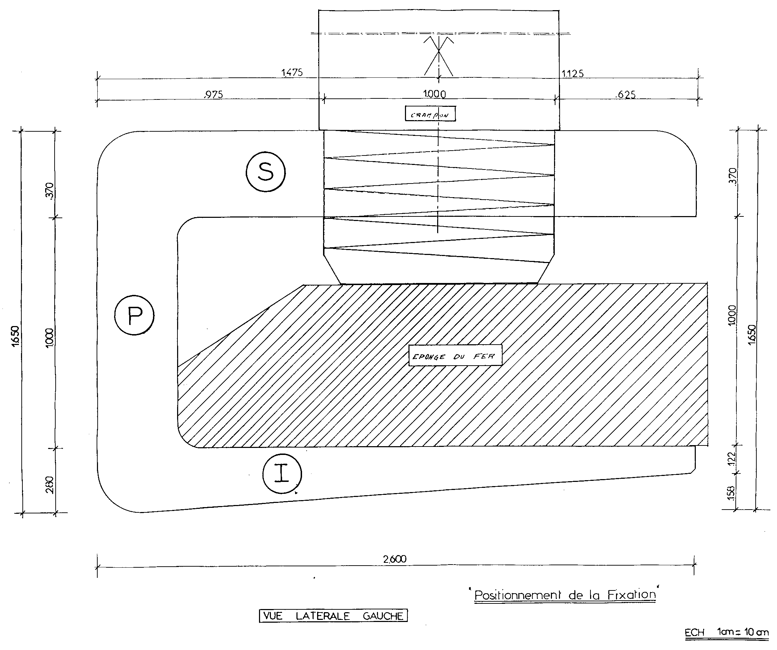

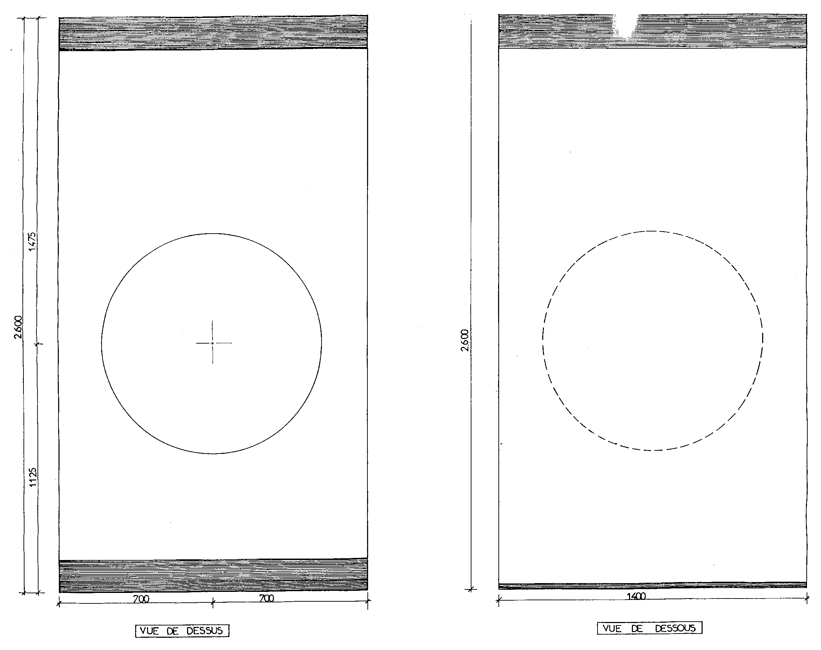

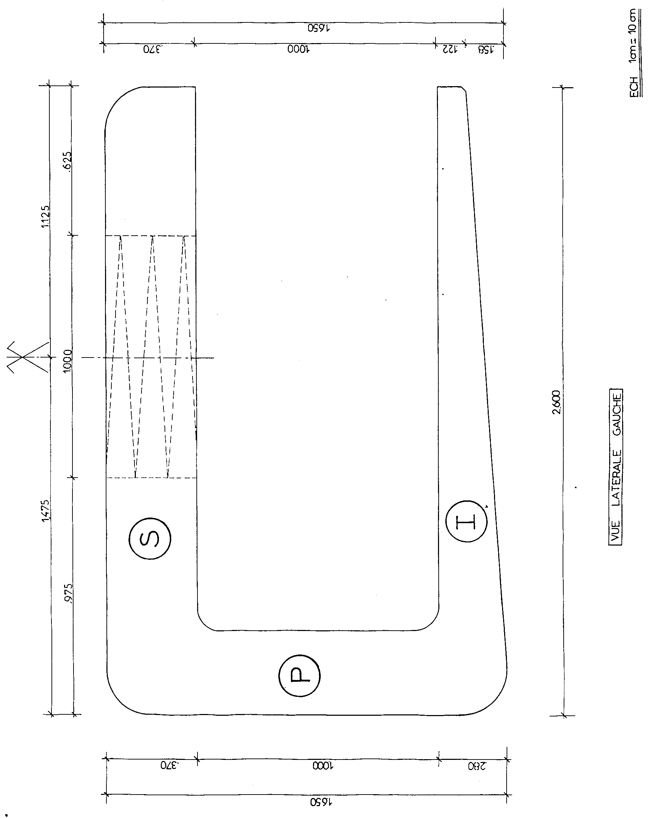

- la figure 1 représente en perspective la fixation
- la figure 2 représente la fixation vue de côté
- la figure 3 représente la vue postérieure de la fixation
- la figure 4 représente la fixation rapide vue de dessus et fait apparaitre le trou de taraudage
- la figure 5 représente le positionnement de la fixation entre le plat de l'éponge du fer et le talon du sabot du cheval
- la figure 6 reprend les éléments de la figure 5 en faisant apparaitre la fixité par serrage du crampon.

En référence à ces dessins, la fixation selon l'invention comporte:
- la partie inférieure (1) éffilée qui se glisse facilement entre le plat de l'éponge du fer (4) et la partie talon du sabot du cheval (5)
- la partie supérieure (2) qui vient se positionner sur la face supérieure de l'éponge du fer, cette partie supérieure est tarandée d'un pas de vis 10/150 permettant l'utilisation et la tenue de la fixation par serrage du crampon
- la partie postérieure (3) qui vient s'appliquer contre l'épaisseur intérieure de l'éponge du fer.
Les courbures aux angles de la fixation selon l'invention lui donne une élasticité permettant une déformation nécessaire lors du serrage du crampon.

Cette élasticité se manifeste lors du déblocage du crampon et enlévement de la fixation ceci grace à l'acier trempé Z38 CD V5.

La fixation selon l'invention aura des dimensions de l'ordre de 1,4 cm de largeur, 1,65 cm de hauteur et 2,60 cm de longueur.

La fixation selon l'invention est particuliérement destinée à équiper la ferrure équine pour les chevaux de sports qui concourrent sur des terrains gras ou glissant.

### OBSERVATIONS

1 - Fabrication et usinage de la fixation grace à l'acier trempé Z38 CD V5, taraudage d'un trou pour positionnement d'un crampon standard.
2 - Positionnement, enlévement rapide et simple du support n'obligeant aucunement l'utilisateur à la mise en place d'une protection du trou de taraudage.
3 - Enlévement aisé par glissement entre la sôle du pied du cheval et l'éponge du fer de la fixation aprés desserrage du crampon standard.
4 - Grace à l'utilisation facile de la fixation, l'utilisateur n'a pas à maintenir en place le support de crampon avec une protection du trou de taraudage formant une sur - épaisseur sur la ferrure traditionnelle pouvant entrainer une instabilité du pied lors de l'emploi ou du repos de l'équidé sur un sol plat. Mais respecte pleinement l'équilibre naturel et la tenue du pied du cheval.
5 - La partie inférieure du support étant éfilée n'entraine pas de décollement de l'éponge du fer par rapport au talon du sabot du cheval, son positionnement par glissement ne procure aucune géne pour le cheval lors de son utilisation.
6 - La fixation ainsi envisagée ne demande aucune encoche ou réservation dans le fer standard.
7 - La fixation ainsi envisagée ne nécessite lors de son positionnement aucun taraudage ou vissage direct dans le fer du cheval.
8 - De part l'élasticité de l'acier trempé Z38 CD V5 la fixation permet une tenue efficace du crampon par serrage dans la feuillure du fer standard.
9 - Le positionnement de la fixation par serrage par le dessus du crampon avec une clé de 13 permet à l'utilisateur un dégagement rapide et sans incident de la clé, lors de l'emploi d'un cheval nerveux , contrairement à un vissage sur le côté ou de face ne permettant pas toujours un dégagement simple et sans incident de l'outil, pouvant entrainer blessure pour le cheval ou l'utilisateur.
10 - La mise en place de la fixation doit être rapide car la tenue et l'immobilisation du pied du cheval est plus difficile lors d'une sortie en extérieur ou en compétition (transport, énervement, etc..).
   La fixation créée répond particuliérement à ce besoin par sa fiabilité et son emploi facile.

## Revendications

1. Dispositif de fixation pour crampon standard venant se fixer sur la ferrure d'un cheval caractérisé par le fait qu'une partie inférieure éffilée (1) permet son positionnement par encastrement rapide entre le plat de l'éponge du fer (4) et le talon du sabot d'un cheval (5).

2. Dispositif de fixation selon la revendication 1 caractérisée par le fait que la partie supérieure (2) taraudée assure sa fixité par serrage du crampon sur la partie supérieure de l'éponge du fer.
